# EUROPÄISCHE PATENTSCHRIFT

(11) **EP 2 081 351 B1**
(45) Veröffentlichungstag und Bekanntmachung des Hinweises auf die Patenterteilung: **31.08.2011**
(21) Anmeldenummer: 08000900.4
(22) Anmeldetag: 18.01.2008
(51) Int. Cl.: H04L 29/06, H04N 5/00

(54) **Verfahren und System zur synchronisierten empfangsseitigen Bereitstellung von Triggerinformationen für interaktive TV-Anwendungen**
Method and system for synchronised receiver-side preparation of trigger information for interactive TV applications
Procédé et système destinés à la préparation synchronisée du côté de la réception d'informations de déclencheur pour applications TV interactives

(43) Veröffentlichungstag der Anmeldung: 22.07.2009
(73) Patentinhaber: Deutsche Telekom AG, 53113 Bonn (DE)
(72) Erfinder: Buchholz, Thomas, 10317 Berlin (DE); Scherer, Christoph, 64625 Bensheim (DE); Kölln, Florian, 12161 Berlin (DE); Wischnowsky, Sven, 12163 Berlin (DE)
(74) Vertreter: Blumbach - Zinngrebe

(56) Entgegenhaltungen:
- EP-A- 1 826 981
- US-A1- 2007 107 011
- US-B1- 6 463 585

## Beschreibung

### Beschreibung

Die Erfindung betrifft allgemein IP-basierte digitale Datenübertragung und insbesondere ein Verfahren zum Übertragen von Triggerinformationen an Empfangseinheiten eines Datenübertragungssystems sowie ein entsprechendes Datenübertragungssystem.

Die steigende Übertragungskapazität IP-basierter Netzwerke ermöglicht eine zunehmende Verbreitung von Breitbandanwendungen, wie beispielsweise IPTV. IPTV (Internet-Protokoll-Fernsehen) bezeichnet die digitale Übertragung von Fernsehprogrammen oder Filmen, sowie Zusatzdaten über ein digitales, IP-basiertes Datennetz. Um einen ausreichenden QoS (Quality of Service) gewährleisten zu können, wird für IPTV-Übertragungen typischerweise ein geschlossenes IP-Datennetz verwendet. Die als Internet-TV bezeichnete Übertragung von Fernsehprogrammen oder Filmen über das Internet erlaubt heute typischerweise noch keine ausreichende Netzverfügbarkeit, um eine störungsfreie Videoausgabe bei höheren Auflösungen zu ermöglichen.

Als Empfangseinheiten für IPTV werden üblicherweise sogenannte Set-Top-Boxen verwendet, die eine Schnittstelle zur Anbindung an ein IP-basiertes Netzwerk sowie einen Ausgang zum Anschluss eines Fernsehgerätes aufweisen. Die Set-Top-Box (STB) empfängt über das Netzwerk einen gegebenenenfalls kodierten Datenstrom, dekodiert diesen und teilt die empfangenen Daten in Video-, Audio- und Zusatzdaten auf, wobei die Video- und Audiodaten an das angeschlossene Fernsehgerät ausgegeben werden.

Durch die Netzwerkanbindung steht ein Rückkanal zur Verfügung, der die Bereitstellung einer Vielzahl interaktiver Zusatzfunktionen ermöglicht. Beispiele solcher interaktiver Dienste sind Video-on-Demand, Near-Video-on-Demand, Suche nach Fernsehsendern oder Sendungen nach Nutzervorgaben, Zugriff auf Chaträume oder das Durchführen von Kauftransaktionen.

Aus der EP 1 826 981 A1 ist ein interaktives Multimedia-Fernsehrundfunksystem mit einem zugeordneten Werbungskanal bekannt, bei welchem Fernsehdaten von einem Content-Server zu einem gegebenenfalls mit einer Set-Top-Box ausgerüsteten Fernsehgerät eines Endnutzers übertragen werden. Stellt der Content-Server fest, dass zu einer zu übertragenden Multimedia-Dateneinheit, welche beispielsweise ein Werbeblock sein kann, Interaktivität vorgesehen ist, so informiert er eine Interaktivitäts-Datenbank. Die Datenbank prüft, welche Interaktivitäts-Einheit dem aktuellen Content zugeordnet ist, beispielsweise eine Kanaleinladung in Form eines Popup, und bewirkt, dass die Interaktivitäts-Einheit von einem Interaktivitäts-Server zum Fernsehgerät des Endnutzers übertragen wird. Auf dem Fernsehgerät wird der Content und die Interaktivitäts-Einheit überlagert dargestellt.

Eine besondere Form der Interaktivität wird als interaktives Fernsehen bezeichnet, bei welcher der Nutzer über den Rückkanal Einfluss auf die Fernsehhandlung nehmen kann. Als technische Plattform für interaktives Fernsehen ist die Multimedia Home Platform (MHP) des DVB-Projekts (Digital Video Broadcast) bekannt. In diesem Zusammenhang sind auch Verfahren zur Übertragung und Auswertung von Trigger-Events in Set-Top-Box-Applikationen synchron zur Wiedergabe von bestimmten Inhalten in laufenden digitalen Fernsehprogrammen bekannt. Zu diesem Zweck können beispielsweise die in der Spezifikation ETSI ES 201 812 V.1.1.2 (2006-08) beschriebenen Application Information Tables (AIT) eingesetzt werden.

Diesen Verfahren ist gemein, dass die Übertragung der Trigger-Events in einen Gesamt-Multiplex-Stream erfolgt, der auch die digital codierten audiovisuellen Daten des Femsehprogrammes sowie Meta- und Kontroll-Daten enthält. Der Gesamt-Multiplex-Stream wird dann in der Set-Top-Box dekodiert und weiter verarbeitet. Die Triggersignale sind somit für alle empfangenden Set-Top-Boxen gleich. Eine individuelle und flexible Übertragung von Triggerinformationen ist auf diese Weise nicht möglich.

Der vorliegenden Erfindung liegt daher die Aufgabe zugrunde, einen verbesserten Weg aufzuzeigen, um bei digitalen Datenübertragungen, insbesondere bei IPTV, Triggerinformationen an Empfängereinheiten zu übermitteln.

Diese Aufgabe wird durch ein Verfahren gemäß Anspruch 1 sowie durch ein Datenübertragungssystem gemäß Anspruch 14 gelöst. Vorteilhafte Ausführungsformen und Weiterbildungen sind Gegenstand der jeweiligen Unteransprüche.

Das erfindungsgemäße Verfahren zum Übertragen von Triggersignalen geht von einem IP-basierten Datenübertragungssystem aus, bei welchem wenigstens ein Sender über ein IP-basiertes Netzwerk mit einer Vielzahl von Empfangseinheiten verbunden ist, wobei über einen ersten Übertragungskanal von dem Sender ein digitaler Datenstrom an die Vielzahl von Empfangseinheiten übertragen wird. Das Verfahren sieht ferner ein synchronisiertes Übertragen von dem digitalen Datenstrom zugeordneten Triggerinformationen von wenigstens einer zentralen Steuereinheit zu wenigstens einer ausgewählten Empfangseinheit über einen zweiten, vom ersten Übertragungskanal separaten Übertragungskanal vor, wobei in Antwort auf den Empfang der Triggerinformation eine vorbestimmte Aktion durch die Empfangseinheit ausgeführt wird. Um Triggerinformationen nur bei Bedarf zu übertragen, sieht das Verfahren einen Polling-Betrieb vor, wobei die zentrale Steuereinheit als Polling-Server ausgebildet ist und die Empfangseinheit zu vorgegebenen Zeitpunkten Sendeaufrufe an die zentrale Steuereinheit überträgt, um die Übertragung der Triggerinformationen durch die zentrale Steuereinheit zu initiieren. Das erforderliche Maß an Synchronität zwischen der Übertragung des digitalen Datenstroms und der zugeordneten Triggerinformationen ist typischerweise vom Inhalt des digitalen Datenstroms und der auszuführenden vorbestimmten Aktion abhängig. Eine vollständig zeitsynchrone Übertragung des digitalen Datenstroms und der zugeordneten Triggerinformationen ist dabei in der Regel nicht erforderlich.

Besonders vorteilhaft wird das Verfahren bei interaktiven Fernsehanwendungen eingesetzt. Dementsprechend umfasst der digitale Datenstrom vorzugsweise audiovisuelle Daten, insbesondere digitale Fernsehdaten, wobei gleichzeitig auch mehrere Fernsehprogramme im Datenstrom enthalten sein können. Das synchronisierte Übertragen der Triggerinformationen erfolgt in dieser Ausführungsform vorzugsweise derart, dass die vorbestimmte Aktion durch die Empfangseinheit im Wesentlichen synchron mit der Ausgabe zugeordneter, im digitalen Datenstrom enthaltener Fernsehdaten erfolgt. Die Empfangseinheiten sind vorteilhaft als Set-Top-Boxen (STB) ausgebildet, welche die Ausgabe eines Fernsehsignals auf einem herkömmlichen Fernsehgerät ermöglichen. Die empfangenen Triggerinformationen werden von der STB vorzugsweise zum Steuern einer auf der STB ablaufenden interaktiven Anwendung eingesetzt. Die interaktive Anwendung ist vorteilhaft dazu ausgebildet, die an das angeschlossene Fernsehgerät auszugebenden audiovisuellen Signale mit interaktiven Grafik- oder Audiosignalen zu kombinieren. Auf diese Weise können dem Zuschauer zusätzliche Informationen bereitgestellt oder dieser zu Eingaben aufgefordert werden.

Um die Triggerinformationen flexibel und individuell an ausgewählte Empfangseinheiten zu übertragen, werden die Triggerinformationen in der zentralen Steuereinheit vorzugsweise zusammen mit verknüpften Adressierungsdaten und/oder Programmdaten bereitgestellt, wobei die Triggerinformationen nur an adressierte Empfangseinheiten und/oder an Empfangseinheiten, auf denen ein mit den Programmdaten übereinstimmendes Sendeprogramm ausgewählt ist, übertragen werden.

Mit Hilfe der Adressierungsdaten können besonders vorteilhaft Triggerinformationen für einzelne Nutzer oder Nutzergruppen übertragen werden, so dass der digitale Datenstrom, welcher insbesondere Fernsehdaten eines auf der Empfangseinheit ausgewählten Fernsehprogramms umfasst, mit individuellen Inhalten, wie beispielsweise zielgruppenspezifischen Werbeinhalten angereichert werden kann. Zu diesem Zweck werden die Adressierungsdaten vorzugsweise in Abhängigkeit hinterlegter Nutzerprofile bereitgestellt, wobei die Nutzerprofile beispielsweise in einem zentralen, an das Netzwerk angeschlossenen Server hinterlegt sind.

Zur automatischen Generierung der Sendeaufrufe ist innerhalb der Empfangseinheit vorzugsweise eine lokale Sendeaufrufsteuerung vorgesehen, die zu geeigneten Zeitpunkten Triggerinformationen anfordert. Diese Sendeaufrufsteuerung wird vorteilhaft durch Parameter aus den Triggerinformationen beeinflusst. Zur Realisierung reicht eine Scriptsprache auf der Empfangseinheit, die in der Lage ist, Sendeaufrufe zu generieren, wie sie zum Beispiel bei Empfangseinheiten mit einem integrierten, beispielsweise als Webbrowser ausgebildeten, Client mit Javascript/ECMAScript bereits vorhanden ist. Im Falle einer mit einem Webbrowser ausgestatteten Empfangseinheit kann die Sendeaufrufsteuerungslogik selbst per Webaufruf in den Webbrowser geladen werden.

Vorzugsweise werden bei mit einem entsprechenden Client ausgestatteten Empfangseinheiten die Sendeaufrufe als AJAX-Anfragen von einem in der Empfangseinheit integrierten, beispielsweise als Browser ausgebildeten, Client übermittelt. Ajax (Asynchronous JavaScript and XML) bezeichnet ein Konzept der asynchronen Datenübertragung zwischen einem Server und einem Client, beispielsweise einem Browser, das es ermöglicht, innerhalb einer HTML-Seite eine HTTP-Anfrage durchzuführen, ohne die Seite komplett neu laden zu müssen. Selbstverständlich können die Sendeaufrufe auch in einem anderen geeigneten, auch zukünftigen Format, insbesondere auch unter Verwendung einer anderen geeigneten Scriptsprache übermittelt werden.

Zweckmäßigerweise umfasst jeder Sendeaufruf Informationen zur Identifikation der Empfangseinheit und/oder

Informationen über wenigstens ein auf der Empfangseinheit ausgewähltes Sendeprogramm, wobei in der zentralen Steuereinheit in Abhängigkeit dieser Informationen überprüft wird, ob Triggerinformationen für die anfragende Empfangseinheit vorliegen. In der bevorzugten Ausführungsform, in der die zentrale Steuereinheit als Polling-Server ausgebildet ist, erhält der Polling-Server die adressierten Triggerinformationen typischerweise von einem Applikations-Server und speichert die Triggerinformationen für eine vorgegebene Zeitdauer.

In einer bevorzugten Ausführungsform sind mehrere Polling-Server vorgesehen, deren Anzahl typischerweise an die Anzahl der an das Netzwerk angeschlossenen Empfangseinheiten angepasst ist. In dieser Ausführung des Verfahrens wird von der Empfangseinheit vorteilhaft automatisch eine der als Polling-Server ausgebildeten zentralen Steuereinheiten ausgewählt und die Sendeaufrufe an die ausgewählte zentrale Steuereinheit übertragen. Die Auswahl erfolgt dabei vorzugsweise in Abhängigkeit empfangener Steuerinformationen und/oder in Abhängigkeit der Erreichbarkeit der zentralen Steuereinheiten.

Die Steuerinformationen können innerhalb der Triggerinformationen übertragen werden und vorzugsweise auch dazu eingesetzt werden, die Frequenz der Sendeaufrufe festzulegen. Diese Frequenz wird in der Regel ausreichend klein gewählt, um eine Übertragung der Triggerinformationen ausreichend synchron zu dem digitalen Datenstrom zu gewährleisten. Da dementsprechend eine hohe Anzahl an Empfangseinheiten zu einem hohen Aufkommen an Sendeaufrufen führt, kann durch eine angepasste Anzahl an Polling-Servern besonders vorteilhaft eine Skalierung des Systems erreicht werden.

Der Empfang der Triggerinformationen kann in der Empfangseinheit beispielsweise eine Aktion auslösen, die Änderungen in einer in einem Browser angezeigten Seite bewirkt. Alternativ kann der Empfang der Triggerinformationen auch einen Informationsabruf von einem Applikations-Server bewirken, wobei der Informationsabruf beispielsweise mittels eines auf TCP oder UDP basierenden Transportprotokolls, insbesondere als HTTP-Anfrage mittels eines in der Empfangseinheit integrierten Browsers erfolgt. Der Informationsabruf von dem Applikations-Server kann dabei vorteilhaft über die zentrale Steuereinheit als Proxy erfolgen.

Ein erfindungsgemäßes Datenübertragungssystem zum Ausführen des oben beschriebenen Verfahrens umfasst wenigstens einen Sender, wenigstens eine zentrale Steuereinheit und eine Vielzahl von Empfangseinheiten, die über ein IP-basiertes Netzwerk miteinander verbunden sind. Das Datenübertragungssystem ist dazu ausgebildet, über einen ersten Übertragungskanal von dem Sender einen digitalen Datenstrom zu der Vielzahl von Empfangseinheiten zu übertragen, und über einen zweiten, vom ersten Übertragungskanal separaten Übertragungskanal von der zentralen Steuereinheit dem digitalen Datenstrom zugeordnete, synchronisierte Triggerinformationen zu wenigstens einer ausgewählten Empfangseinheit zu übertragen, wobei die Empfangseinheiten dazu ausgebildet sind, in Antwort auf den Empfang einer Triggerinformation eine vorbestimmte Aktion auszuführen.

Die Empfangseinheiten sind dazu ausgebildet, zu vorgegebenen Zeitpunkten Sendeaufrufe an die zentrale Steuereinheit zu übertragen, um die Übertragung der Triggerinformationen durch die zentrale Steuereinheit zu initiieren, wobei ein Sendeaufruf vorteilhaft Informationen zur Identifikation der jeweiligen Empfangseinheit und/oder Informationen über wenigstens ein auf der jeweiligen Empfangseinheit ausgewähltes Sendeprogramm umfasst.

Die Komponenten des Datenübertragungssystems sind ferner vorzugsweise dazu ausgebildet, die oben beschriebenen Ausführungsformen des erfindungsgemäßen Verfahrens auszuführen.

Die Erfindung ermöglicht die zeitsynchrone Bereitstellung von Triggerevents für interaktive TV Anwendungen, wobei deren Übertragung und die notwendige Auswertelogik nicht Bestandteil des eigentlichen IPTV-Systems zur Bereitstellung von TV-Inhalten ist, sondern separat von diesem über ein eigenständiges Protokoll, zum Beispiel über Webanwendungen, insbesondere kombiniert mit einer clientseitigen Scriptsprache wie JavaScript mit AJAX Polling, realisiert wird.

Einen Kernaspekt bildet dabei eine Polling-Funktion, die fortlaufend in einem Client-Browser auf der STB ausgeführt wird. Diese übermittelt fortlaufend Anfragen nach Triggerevents an einen Polling-Server, verbunden mit einer gerätespezifischen ID (Identifikation). Liegt serverseitig ein Triggerevent, gegebenenfalls speziell für die in der Anfrage übermittelte ID, vor, so wird diese Information umgehend an den Client-Browser übermittelt. Zur Erhöhung der Performance wird die serverseitig notwendige Logik vorteilhaft auf Polling-Server für Request-intensive Verarbeitung der fortlaufenden Anfragen und Applikations-server, welche die eigentliche Verarbeitungslogik realisieren, getrennt.

Gegenüber im Multiplex-Stream übertragenen Trigger-Events ermöglicht die Erfindung vorteilhaft, per Broadcast und/oder Multicast bereitgestellte Ströme individuell und/oder personalisiert mit Trigger-Events bzw. daraus folgenden Aktionen anzureichern, beispielsweise in Abhängigkeit demografischer Daten oder hinterlegter Kundenprofile. Soweit eine Set-Top-Box über einen Scriptfähigen Browser verfügt, in dem auch die Streams dargestellt werden können, sind zudem keine Modifikationen zur Realisierung einer Triggerevent-Verarbeitung notwendig.

Die Erfindung wird nachfolgend beispielhaft anhand bevorzugter Ausführungsformen und unter Bezugnahme auf die beigefügten Zeichnungen genauer beschrieben. Dabei bezeichnen gleiche Bezugszeichen in den Zeichnungen gleiche oder ähnliche Teile.

Es zeigen:
- Fig. 1:: schematisch eine bevorzugte Ausführungsform eines erfindungsgemäßen Datenübertragungssystems,
- Fig. 2:: schematisch ausgewählte Komponenten einer ersten Variante einer bevorzugten Ausführungsform eines erfindungsgemäßen Datenübertragungssystems mit mehreren Polling-Servern, und
- Fig. 3:: schematisch ausgewählte Komponenten einer zweiten Variante einer bevorzugten Ausführungsform eines erfindungsgemäßen Datenübertragungssystems mit mehreren Polling-Servern.

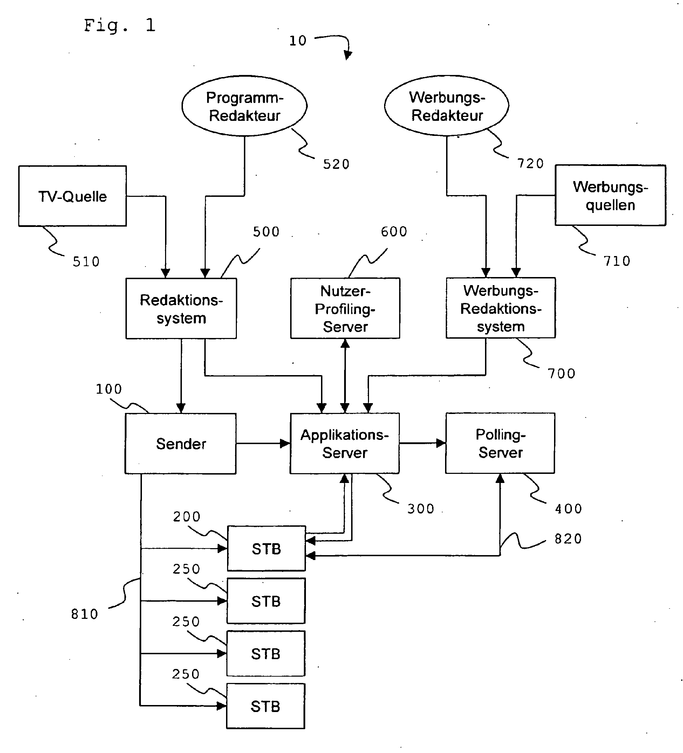

In Fig. 1 ist eine bevorzugte Ausführungsform eines als IPTV-System ausgebildeten Datenübertragungssystems 10 dargestellt, welches die Übertragung von digitalen TV-Signalen von einem Einspeisepunkt zu IP-basierten Set-Top-Boxen 200 und 250 über ein IP-Netz realisiert. Zu diesem Zweck ist wenigstens eine TV-Quelle 510 vorgesehen, welche mit einem Redaktionssystem 500 verbunden ist, wobei das Redaktionssystem 500 mittels Eingaben eines Programm-Redakteurs 520 gesteuert wird. Das Redaktionssystem liefert einen Multiplex-Datenstrom an einen Sende-Server 100, welcher diesen an die IP-basierten Set-Top-Boxen 200 und 250 über ein IP-Netz weiterleitet, wobei für die Übertragung ein erster Übertragungskanal 810 genutzt wird.

Es ist zumindest eine IP-basierte Set-Top-Box 200 vorgesehen, die neben Applikationen zur Auswahl und Wiedergabe von TV-Programmen auch einen XHTML Browser aufweist, der JavaScript unterstützt. Die JavaScript-Engine verfügt über eine individuelle gerätespezifische ID und ist in der Lage, diese innerhalb eines XMLHTTPRequest (Ajax-Request) zu übertragen. Die Übertragung kann alternativ auch über eine andere geeignete Scriptsprache erfolgen.

Es können von der Set-Top-Box weitere Server innerhalb des IP-TV-Netzes erreicht werden. Ferner gibt es ein System, das zeitlich synchron zu einem laufenden TV-Programm erzeugte Events für den Applikationsserver 300 bereitstellt. Zu diesem Zweck kann beispielsweise das Redaktionssystem 500 für interaktive TV-Anwendungen ausgebildet sein.

Durch Anwendung der Erfindung ist es möglich, zeitlich synchron Triggerevents für interaktive TV-Anwendungen auf einer IP-basierten Set-Top-Box 200 bereitzustellen, wobei deren Übertragung und die notwendige Auswertelogik nicht Bestandteil des eigentlichen IPTV-Systems ist.

Zu diesem Zweck sind weitere Server im IPTV-Netzwerk vorgesehen, in der dargestellten Ausführungsform sind dies der Applikations-Server 300, wenigstens ein Polling-Server 400, ein User-Profiling-Server 600 sowie ein Werbungs-Redaktionssystem 700.

Der Applikations-Server 300, beispielsweise ein Apache Tomcat, bildet den Kern der Applikationen und übermittelt extern eingehende Trigger-Events an die Polling Server 400. Der User-Profiling-Server 600 dient der Personalisierung der gerätespezifischen IDs der Set-Top-Boxen und der Sortierung nach Nutzungsdaten und Angaben der Nutzer der Set-Top-Boxen nach Profilen.

Das Werbungs-Redaktionssystem 700, gesteuert durch Eingaben eines Werbungs-Redakteurs 720, bereitet Daten von Werbequellen 710 in personalisierte, einblendbare Werbeinhalte auf und übermittelt diese an den Applikationserver 300. Die Aufbereitung erfolgt dabei automatisch in Abhängigkeit von im User-Profiling-Server 600 hinterlegten Nutzerprofilen.

User-Profiling-Server 600 und Werbungs-Redaktionssystem 700 können im Applikationsserver 300 integriert sein. Die Trennung in eigenständige technische Komponenten bewirkt aber vorteilhaft, dass eine Werbungsredaktion ohne Kenntnis individueller Nutzerdaten die Werbungen an Nutzerprofilen ausrichten kann, während die technische Komponente Applikationsserver 300 Werbeaufträge automatisiert zusammenfügen kann.

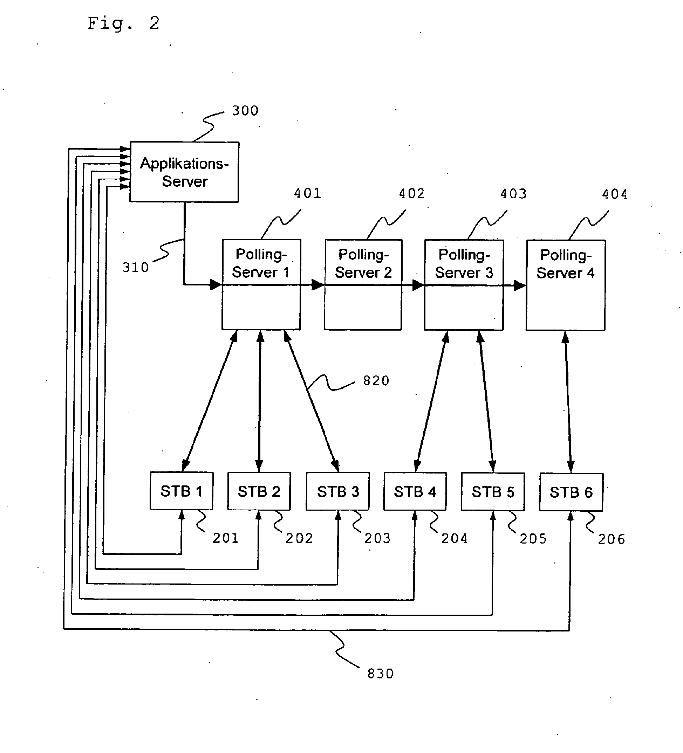

Es sind vorzugsweise ein Polling-Server 400 oder, wie in Fig. 2 dargestellt, mehrere Polling-Server 401-404 für Request-intensive Verarbeitung vorgesehen. Die Aufgabe der Polling-Server 400-404 besteht darin, die vom Applikations-Server 300 gemeldeten Ereignisse eine gewisse Zeit zu cachen und auf Anfrage automatisch über eine zweiten Übertragungskanal 820 an die jeweilige Set-Top-Box 200 bzw. 201-206 auszuliefern.

Auf jeder der Set-Top-Boxen 200-206 wird ein Client, zum Beispiel ausgebildet als Browser, ausgeführt, welcher Webseiten vom Applikations-Server 300 lädt, um sie auf der jeweiligen Set-Top-Box bzw. einem angeschlossen Fernsehgerät darzustellen. Der Browser ist ein empfängerseitiges Programm, das die vom Applikations-Server gesendeten Informationen und Interaktionen darstellt. Webseiten sind alle Seiten, die in einem solchen Browser dargestellt werden können, beispielsweise im XHTML-Format, und können Scripte, beispielsweise in Form von JavaScript, enthalten. In der dargestellten Ausführungsform wird eine Webseite geladen, die ein Script enthält, das in kurzen Abständen per AJAX-Requests an einem der Polling-Server 400-404 pollt. Die Anfragen enthalten mindestens die jeweilige gerätespezifische ID und die Information, welcher Sender gerade aktiviert ist. Die Ereignisse, mit denen die Set-Top-Box 200 versorgt wird, setzt sie in Aktionen am Browser um.

Wie in Fig. 2 dargestellt sind vorzugsweise mehrere Polling-Server 401-404 vorgesehen. In dieser Variante werden die Set-Top-Boxen 201-206 vorzugsweise auch mit Informationen versorgt, mit der sie angewiesen werden, automatisch auf einen bestimmten anderen Polling-Server 401-404 zu wechseln, mit anderen zeitlichen Abständen zu pollen und automatisch aus einer Liste von Polling-Servern 401-404 zu wählen und dort hin zu wechseln, wenn der aktuelle Polling Server nicht in einem vorgegebenen Zeitintervall antwortet.

Die Umsetzung der Trigger-Events sind entweder in der Antwort des jeweiligen Polling-Servers 401-404 enthalten, zum Beispiel die Anweisung, einen Teilbaum des XHTML der Webseite zu verändern, oder sie lösen automatisiert Interaktionen durch herkömmliche HTTP-Requests 830 des Browsers an den Applikations-Server 300 aus.

Unabhängig von den Abständen der AJAX-Requests der Set-Top-Boxen 201-206 kann der Applikations-Server 300 rechenintensiven Aufgaben nachgehen, ohne dass er von den AJAX-Requests behindert wird. Dazu postet er Ereignisse pro Auftreten einmal per Multicast 310 an die Polling Server 401-404, die selbständig die weitere Bearbeitung der Polling-Requests übernehmen.

Personalisierte Ereignisse postet der Applikations-Server 300 unter Angabe der gerätespezifischen ID an die Polling Server 401-404. Es können auch Ereignisse an Gruppen ausgeliefert werden, wobei das jeweilige Ereignis dann mehrere gerätespezifische IDs enthält. Ein Polling-Server 401-404 beinhaltet eine Verarbeitungslogik, die nur die Ereignisse an die anfragende Set-Top-Box liefert, die entweder keine gerätespezifische ID oder mindestens die gerätespezifische ID der Anfrage enthält sowie den Senderkontext. Dies ermöglicht dem Applikations-Server die automatische Bereitstellung gerätespezifischer Triggerevents als Basis für personalisierte Applikationen, ohne einen Mehraufwand in der Auslieferung zu haben.

Alle Polling-Server 401-404 sind gleichwertig, wobei die Verarbeitungslogik des jeweiligen Polling-Servers nur die aktuellen Daten benötigt, die sie vom Applikationsserver 300 per Multicast erhält. Aufgrund der oben beschriebenen Steuerung der Set-Top-Boxen zur Festlegung, von welchem Polling-Server 401-404 eine Set-Top-Box 201-206 zukünftig pollen soll, können neue Polling-Server in das System eingeführt werden oder Polling-Server ohne Neukonfiguration des Systems aus dem System entfernt werden. Damit wird Redundanz und Skalierbarkeit hergestellt. Diese skalierbare Aufteilung ist in Fig. 2 dargestellt.

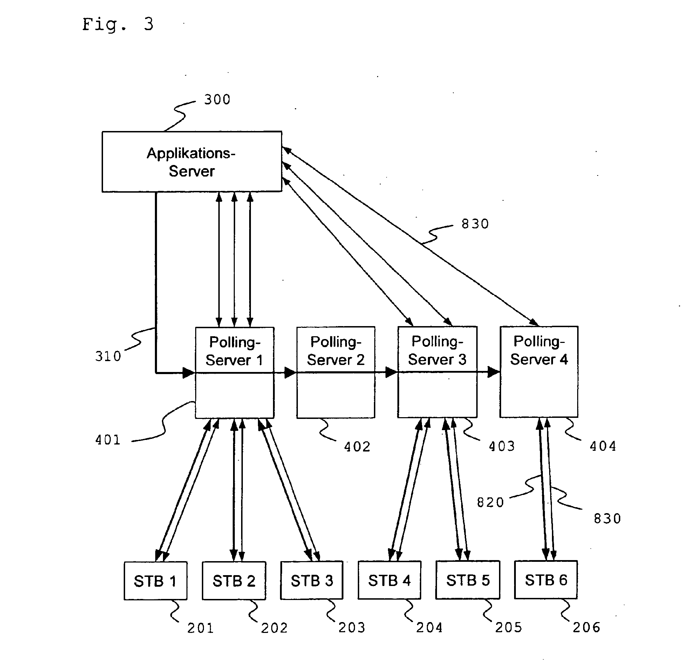

Einige Browser haben erhöhte Sicherheitsanforderungen, um so genanntes Cross-Site-Scripting zu unterbinden. Um das Verfahren unter den Aspekten eines Browsers mit erhöhten Sicherheitsanforderungen für Cross-Site-Scripting, wie zum Beispiel Mozilla Firefox, zu realisieren, müssen die AJAX-Requests auf den selben Rechner zugreifen, von dem auch die Webseite kommt, in der oben beschriebenen Ausführungsform somit vom Applikations-Server 300. Um die Vorteile der Skalierbarkeit und Redundanz durch die Abtrennung der Polling-Server 401-404 vom Applikations-Server zu erhalten, wird der Aufbau wie in Fig. 3 dargestellt modifiziert.

In dieser Ausführungsform ist jeder Polling-Server 401-404 gleichzeitig serverseitiger Proxy-Server des Applikations-Servers 300. Es ist zwischen Applikations-Servers 300 und jeweiligem Polling-Server ein bestimmter Namensraum innerhalb der Request-URL festgelegt, in dem keine Anfragen an den Applikations-Server 300 vorkommen. Anfragen innerhalb dieses Namensraums beantwortet der jeweilige Polling-Server als Polling-Anfragen 820. Alle anderen Anfragen 830 der Set-Top-Boxen 201-206 werden automatisch vom jeweiligen Polling-Server 401-404 an den Applikations-Server 300 weitergeleitet, und die Antworten an die Set-Top-Boxen 201-206 zurückgeleitet. Diese Variante der Erfindung erfordert lediglich einen leicht erhöhten Aufwand in der Verarbeitungslogik der Polling-Server 401-404.

## Patentansprüche

1. Verfahren zum Übertragen von Triggersignalen an wenigstens eine Empfangseinheit (200-206) eines Datenübertragungssystems (10), wobei das Datenübertragungssystem (10) wenigstens einen Sender (100) umfasst, der über ein IP-basiertes Netzwerk mit einer Vielzahl von Empfangseinheiten (200-206) verbunden ist, umfassend die Schritte
- Übertragen eines digitalen Datenstroms von dem Sender (100) an die Vielzahl von Empfangseinheiten (200-206) über einen ersten Übertragungskanal (810),
- Synchronisiertes Übertragen von dem digitalen Datenstrom zugeordneten Triggerinformationen von wenigstens einer zentralen Steuereinheit (400-404) zu wenigstens einer ausgewählten Empfangseinheit (200-206) über einen zweiten, vom ersten Übertragungskanal separaten Übertragungskanal (820), und
- Ausführen einer vorbestimmten Aktion durch die Empfangseinheit (200-206) in Antwort auf den Empfang der Triggerinformation, **dadurch gekennzeichnet, dass** die zentrale Steuereinheit (400-404) als Polling-Server ausgebildet ist und die Empfangseinheit (200-206) zu vorgegebenen Zeitpunkten Sendeaufrufe an die zentrale Steuereinheit (400-404) überträgt, um die Übertragung der Triggerinformationen durch die zentrale Steuereinheit (400-404) zu initiieren.

2. Verfahren nach Anspruch 1, wobei der digitale Datenstrom audiovisuelle Daten, insbesondere digitale Fernsehdaten, umfasst.

3. Verfahren nach Anspruch 1 oder 2, wobei die Triggerinformationen in der zentralen Steuereinheit (400-404) zusammen mit verknüpften Adressierungsdaten und/oder Programmdaten bereitgestellt werden, wobei die Triggerinformationen nur an adressierte Empfangseinheiten (200-206) und/oder an Empfangseinheiten (200-206), auf denen ein mit den Programmdaten übereinstimmendes Sendeprogramm ausgewählt ist, übertragen werden.

4. Verfahren nach Anspruch 3, wobei die Adressierungsdaten in Abhängigkeit hinterlegter Nutzerprofile bereitgestellt werden.

5. Verfahren nach einem der vorstehenden Ansprüche, wobei die Sendeaufrufe als auf einer Scriptsprache basierende Anfragen übermittelt werden.

6. Verfahren nach Anspruch 5, wobei die Sendeaufrufe als AJAX-Anfragen übermittelt werden.

7. Verfahren nach einem der vorstehenden Ansprüche 7, wobei jeder Sendeaufruf Informationen zur Identifikation der Empfangseinheit (200-206) und/oder über wenigstens ein auf der Empfangseinheit (200-206) ausgewähltes Sendeprogramm umfasst.

8. Verfahren nach einem der vorstehenden Ansprüche , wobei von der Empfangseinheit (201-206) automatisch eine der zentralen Steuereinheiten (401-404) ausgewählt wird und die Sendeaufrufe an die ausgewählte zentrale Steuereinheit (401-404) übertragen werden.

9. Verfahren nach Anspruch 8, wobei die Auswahl der zentralen Steuereinheit (401-404) in Abhängigkeit empfangener Steuerinformationen und/oder in Abhängigkeit der Erreichbarkeit der zentralen Steuereinheiten (401-404) erfolgt.

10. Verfahren nach einem der vorstehenden Ansprüche, wobei der Empfang der Triggerinformationen durch die Empfangseinheit (200-206) einen Informationsabruf von einem Applikations-Server (300) bewirkt.

11. Verfahren nach Anspruch 10, wobei der Informationsabruf von dem Applikations-Server (300) über die zentrale Steuereinheit (401-404) als Proxy erfolgt.

12. Verfahren nach Anspruch 10 oder 11, wobei der Informationsabruf mittels eines auf TCP oder UDP basierenden Transportprotokolls erfolgt.

13. Verfahren nach Anspruch 12, wobei der Informationsabruf als HTTP-Anfrage mittels eines in der Empfangseinheit (200-206) integrierten Browsers erfolgt.

14. Datenübertragungssystem (10) zum Ausführen eines Verfahrens gemäß einem der Ansprüche 1 bis 13, umfassend wenigstens einen Sender (100), wenigstens eine zentrale Steuereinheit (400-404) und eine Vielzahl von Empfangseinheiten (200-206), die über ein IP-basiertes Netzwerk miteinander verbunden sind, dazu ausgebildet, über einen ersten Übertragungskanal (810) von dem Sender (100) einen digitalen Datenstrom zu der Vielzahl von Empfangseinheiten (200-206) zu übertragen, und über einen zweiten, vom ersten Übertragungskanal separaten Übertragungskanal (820) von der zentralen Steuereinheit (400-404) dem digitalen Datenstrom zugeordnete, synchronisierte Triggerinformationen zu wenigstens einer ausgewählten Empfangseinheit (200-206) zu übertragen, wobei die Empfangseinheiten (200-206) dazu ausgebildet sind, in Antwort auf den Empfang einer Triggerinformation eine vorbestimmte Aktion auszuführen, **dadurch gekennzeichnet, dass** die Empfangseinheiten (200-206) dazu ausgebildet sind, zu vorgegebenen Zeitpunkten Sendeaufrufe an die zentrale Steuereinheit (400-404) zu übertragen, um die Übertragung der Triggerinformationen durch die zentrale Steuereinheit (400-404) zu initiieren.

15. Datenübertragungssystem nach Anspruch 14, wobei ein Sendeaufruf Informationen zur Identifikation der jeweiligen Empfangseinheit (200-206) und/oder Informationen über wenigstens ein auf der jeweiligen Empfangseinheit (200-206) ausgewähltes Sendeprogramm umfasst.

## Claims

1. Method for transmitting trigger signals to at least one receiving unit (200-206) of a data transmission system (10), wherein the data transmission system (10) comprises at least one transmitter (100) that is connected through an IP-based network to a plurality of receiving units (200-206), comprising the steps
- transmission of a digital data stream from the transmitter (100) to the plurality of receiving units (200-206) through a first transmission channel (810),
- synchronized transmission of trigger information associated with the digital data stream from at least one central control unit (400-404) to at least one selected receiving unit (200-206) through a second transmission channel (820) that is separate from the first transmission channel, and
- execution of a predetermined action by the receiving unit (200-206) in response to the reception of the trigger information, **characterized in that** the central control unit (400-404) is designed as a polling server and, at predetermined points in time, the receiving unit (200-206) transmits polling requests to the central control unit (400-404) in order to initiate the transmission of the trigger information by the central control unit (400-404).

2. Method according to claim 1, wherein the digital data stream includes audiovisual data, in particular digital television data.

3. Method according to claim 1 or 2, wherein the trigger information is provided in the central control unit (400-404) together with linked addressing data and/or program data, wherein the trigger information is transmitted only to addressed receiving units (200-206) and/or to receiving units (200-206) at which a transmission program matching the program data is selected.

4. Method according to claim 3, wherein the addressing data are provided as a function of stored user profiles.

5. Method according to one of the preceding claims, wherein the polling requests are transmitted as queries based on a scripting language.

6. Method according to claim 5, wherein the polling requests are transmitted as AJAX queries.

7. Method according to one of the preceding claims, wherein each polling request comprises information for identifying the receiving unit (200-206) and/or information about at least one transmission program selected at the receiving unit (200-206).

8. Method according to one of the preceding claims, wherein one of the central control units (401-404) is automatically selected by the receiving unit (201-206) and the polling requests are transmitted to the selected central control unit (401-404).

9. Method according to claim 8, wherein the selection of the central control unit (401-404) takes place as a function of received control information and/or as a function of the accessibility of the central control units (401-404).

10. Method according to one of the preceding claims, wherein the reception of the trigger information by the receiving unit (200-206) causes a query of information from an application server (300).

11. Method according to claim 10, wherein the query of information from the application server (300) takes place through the central control unit (401-404) as proxy,

12. Method according to claim 10 or 11, wherein the information query takes place by means of a TCP-based or UDP-based transport protocol.

13. Method according to claim 12, wherein the information query takes place as an HTTP request by means of a browser integrated in the receiving unit (200-206).

14. Data transmission system (10) for executing a method according to any one of claims 1 through 13, comprising at least one transmitter (100), at least one central control unit (400-404), and a plurality of receiving units (200-206) that are connected to one another through an IP-based network, designed to transmit a digital data stream from the transmitter (100) through a first transmission channel (810) to the plurality of receiving units (200-206), and to transmit synchronized trigger information associated with the digital data stream from the central control unit (400-404) to at least one selected receiving unit (200-206) through a second transmission channel (820) that is separate from the first transmission channel, wherein the receiving units (200-206) are designed to execute a predetermined action in response to the reception of trigger information, **characterized in that** the receiving units (200-206) are designed to transmit polling requests to the central control unit (400-404) at predetermined points in time in order to initiate the transmission of the trigger information by the central control unit (400-404).

15. Data transmission system according to claim 14, wherein a polling request comprises information for identifying the respective receiving unit (200-206) and/or information about at least one transmission program selected at the respective receiving unit (200-206).

## Revendications

1. Procédé de transmission de signaux de déclenchement à au moins une unité de réception (200 - 206) d'un système de transmission de données (10), le système de transmission de données (10) comprenant au moins un émetteur (100) relié à une pluralité d'unités de réception (200 - 206) par l'intermédiaire d'un réseau basé IP, comprenant les étapes
- transmission d'un flux de données numériques depuis l'émetteur (100) à la pluralité d'unités de réception (200 - 206) par l'intermédiaire d'un premier canal de transmission (810),
- transmission synchronisée d'informations de déclenchement associées au flux de données numériques depuis au moins une unité centrale de commande (400 - 404) vers au moins une unité de réception (200 - 206) sélectionnée, par l'intermédiaire d'un deuxième canal de transmission (820), séparé du premier canal de transmission, et
- exécution d'une action prédéterminée par l'unité de réception (200 - 206) en réponse à la réception de l'information de déclenchement, **caractérisé en ce que** l'unité centrale de commande (400 - 404) est conçu comme un serveur de scrutation, et **en ce que** l'unité de réception (200 - 206) transmet, à des moments prédéterminés, des invitations à émettre à l'unité centrale de commande (400 - 404) afin de lancer la transmission des informations de déclenchement par l'unité de commande centrale (400 - 404).

2. Procédé selon la revendication 1, dans lequel le flux de données numériques comprend des données audiovisuelles, notamment des données de télévision numériques.

3. Procédé selon la revendication 1 ou 2, dans lequel les informations de déclenchement sont mises à disposition dans l'unité centrale de commande (400 - 404) accompagnées des données d'adressage liées et/ou des données de programme, les informations de déclenchement n'étant transmises qu'à des unités de réception (200 - 206) adressées et/ou à des unités de réception (200
- 206) sur lesquelles un programme d'émission correspondant aux données de programme est sélectionné.

4. Procédé selon la revendication 3, dans lequel les données d'adressage sont mises à disposition en fonction de profils d'utilisateurs enregistrés.

5. Procédé selon l'une des revendications précédentes, dans lequel les invitations à émettre sont transmises comme des demandes basées sur un langage de script.

6. Procédé selon la revendication 5, dans lequel les invitations à émettre sont transmises comme des demandes AJAX.

7. Procédé selon l'une des revendications précédentes, dans lequel chaque invitation à émettre comprend des informations pour l'identification de l'unité de réception (200 - 206) et/ou des informations relatives à au moins un programme d'émission sélectionné sur l'unité de réception (200 - 206).

8. Procédé selon l'une des revendications précédentes, dans lequel l'unité de réception (201-206) sélectionne automatiquement l'une des unités centrales de commande (401 - 404) et en ce que les invitations à émettre sont transmises à l'unité centrale de commande (401 - 404) sélectionnée.

9. Procédé selon la revendication 8, dans lequel la sélection de l'unité centrale de commande (401 - 404) s'effectue en fonction d'informations de commande reçues et/ou en fonction de l'accessibilité des unités centrales de commande (401 - 404).

10. Procédé selon l'une des revendications précédentes, dans lequel la réception des informations de déclenchement par l'unité de réception (200 - 206) déclenche une recherche d'information dans un serveur d'application (300).

11. Procédé selon la revendication 10, dans lequel la recherche d'information dans le serveur d'application (300) s'effectue par l'intermédiaire de l'unité centrale de commande (401 - 404) comme proxy.

12. Procédé selon l'une des revendications 10 ou 11, dans lequel la recherche d'information s'effectue au moyen d'un protocole de transport basé sur TCP ou UDP.

13. Procédé selon la revendication 12, dans lequel la recherche d'information s'effectue comme recherche HTTP au moyen d'un navigateur intégré à l'unité de réception (200 - 206).

14. Système de transmission de données (10) pour l'exécution d'un procédé selon l'une des revendications 1 à 13, comprenant au moins un émetteur (100), au moins une unité centrale de commande (400 - 404) et une pluralité d'unités de réception (200 - 206) reliées entre elles par l'intermédiaire d'un réseau basé IP, conçu de manière à transmettre, à partir de l'émetteur (100), un flux de données numériques à la pluralité d'unités de réception (200 - 206) par l'intermédiaire d'un premier canal de transmission (810), et à transmettre, depuis de l'unité centrale de commande (400 - 404), des informations de déclenchement synchronisées associées au flux de données numériques par l'intermédiaire d'un deuxième canal de transmission (820), séparé du premier canal de transmission, vers au moins une unité de réception (200 - 206) sélectionnée, les unités de réception (200 - 206) étant conçues de manière à exécuter une action prédéterminée en réponse à la réception d'une information de déclenchement, **caractérisé en ce que** les unités de réception (200 - 206) sont conçues de manière à transmettre, à des moments prédéterminés, des invitations à émettre à l'unité centrale de commande (400 - 404), afin de lancer la transmission des informations de déclenchement par l'unité centrale de commande (400 - 404).

15. Système de transmission de données selon la revendication 14, dans lequel une invitation à émettre comprend des informations pour l'indentification de l'unité de réception (200 - 206) respective et/ou des informations relatives à au moins un programme d'émission sélectionné sur l'unité de réception (200 - 206) respective.
